# EUROPÄISCHE PATENTSCHRIFT

(11) **EP 0 709 164 B1**
(45) Veröffentlichungstag und Bekanntmachung des Hinweises auf die Patenterteilung: **31.03.1999**
(21) Anmeldenummer: 95810656.9
(22) Anmeldetag: 24.10.1995
(51) Int. Cl.: B23Q 7/18, B23B 41/00

(54) **Anlage zur Bearbeitung von Platten**
Installation for machining plates
Installation pour l'usinage des plaques

(30) Priorität: 28.10.1994 CH 3231/94
(43) Veröffentlichungstag der Anmeldung: 01.05.1996
(73) Patentinhaber: Bystronic Maschinen AG, CH-4922 Bützberg (CH)
(72) Erfinder: Flückiger, Willy, CH-4912 Aarwangen (CH)
(74) Vertreter: AMMANN PATENTANWAELTE AG BERN

(56) Entgegenhaltungen:
- EP-A- 0 135 849
- DE-A- 3 843 419
- DE-C- 2 902 519
- FR-A- 2 490 531
- FR-A- 2 650 814
- PATENT ABSTRACTS OF JAPAN vol. 10 no. 21 (M-449) [2078] ,29.Januar 1986 & JP-A-60 180734 (NISSAN) 14.September 1985,

## Beschreibung

Die vorliegende Erfindung betrifft eine Anlage zur Bearbeitung von Glasscheiben gemäss Oberbegriff des Anspruchs 1. Eine Anlage dieser Art ist bekannt aus EP-A-0 135 849. Die Bohrstation dieser bekannten Anlage weist einen Rollentisch auf, über welchen rechteckige Glasscheiben zugeführt und durch die Rollendrehung gegen seitliche und stirnseitige Anschläge geschoben und damit orientiert werden, worauf sie mittels an der Hinterkante angreifenden Greifern in die Bohrposition vorgeschoben und gebohrt werden.

Ein wesentlicher Nachteil besteht dabei darin, dass die Orientierungsanschläge der Einwirkung der Kühlflüssigkeit und des abgetragenen Materials unterworfen sind. Im übrigen wird der Aufbau der Bohrstation kompliziert und zugleich bei der gegenseitigen Ausrichtung von Bohrwerkzeugen und der durchbohrenden Glasscheibe beschränkt, da praktisch nur rechteckige Glasscheiben orientiert werden können.

Ziel der vorliegenden Erindung ist es, die erwähnten Nachteile zu vermeiden und optimale Voraussetzungen zu schaffen, um die Bohrstation in eine integrierte Bearbeitungsanlage mit einer Schleifsation zu integrieren. Dieses Ziel wird gemäss Anspruch 1 erreicht. Da die Glasscheiben schon vororientiert zugeführt werden, entfallen Orientierungsmittel, beispielsweise Anschläge, in der unmittelbaren Umgebung der Bohrwerkzeuge. Da der Zubringer einen drehbaren Träger, z. B. Saugteller für Glasscheiben, aufweist, bestehen in der Bohrstation praktisch unbeschränkte Möglichkeiten der gegenseitigen Ausrichtung der zu bohrenden Glasscheibe und der Bohrwerkzeuge. Vorzugsweise sind zwei quer zur Zuführrichtung für Glasscheiben einstellbare Bohrköpfe vorhanden, womit die Möglichkeit gegeben ist, jeweils gleichzeitig zwei Bohrungen in beliebiger gegenseitiger Lage in der Glasscheibe zu erstellen.

Die Erfindung wird nun anhand eines Ausführungsbeispiels einer Anlage zur Bearbeitung von Glasscheiben, beispielsweise für den Fahrzeugbau, erläutert.
- Figur 1: zeigt eine Draufsicht auf die Anlage,
- Figur 2: zeigt eine Seitenansicht der wesentlichen Teile der Anlage und
- Figur 3: zeigt schematisch den Arbeitsablauf in der Anlage.

Die Anlage weist eine Bohrstation 1 mit der eigentlichen Bohrmaschine 2 auf. An einer Führung 3 dieser Bohrmaschine sind zwei Schlitten 4 in Richtung y verschiebbar. Jeder Schlitten 4 trägt einen Bohrkopf 5 mit einem angedeuteten, aber nicht näher bezeichneten Bohrwerkzeug. In an sich üblicher Weise sind an den beiden Schlitten 4 übereinander je zwei Bohrköpfe 5 angeordnet, mittels welcher in eine zugeführte Glasscheibe von unten und oben je auf eine bestimmte Tiefe gebohrt werden kann, um die Scheibe vollständig durchzubohren ohne Gefahr des Absplitterns an den Rändern des Loches.

Die Bohrstation weist einen Zubringer 6 in Form eines Wagens auf, der längs einer nicht dargestellten Führung in Richtung x zwischen der eigentlichen Bohrmaschine 2 und einer Uebergabestation 7 verschiebbar ist. An der Oberseite des Zubringers 6 ist ein Saugteller 8 angebracht, welcher dem Ansaugen und Festhalten einer Glasscheibe 9 dient, die in der Bohrmaschine in zwei Positionen 9, bzw. 9', dargestellt ist. Damit ist angedeutet, dass der Saugteller 8 mit einer angesaugten Scheibe 9 in eine gewünschte Position verdreht werden kann. Diese Dreheinstellung zusammen mit der Einstellung des Zubringers in Richtung x und die Einstellung der Bohrköpfe 5 in Richtung y gestatten es, Löcher an beiliebigen Stellen der Scheibe 9 zu bohren. Zum Bohren wird die Scheibe 9 zusätzlich geklemmt.

In der Uebergabestation 7 befinden sich seitlich eines mittleren Durchgangs für den Zubringer, bzw. den Saugteller 8, Teile eines Rollentransports 10, mittels welchem Scheiben 9 aus der Uebergabestation auf Förderbänder 11 zum Abtransport fertiger Scheiben in Pfeilrichtung, also quer zur Bewegungsrichtung des Zubringers 6, übergeben werden können.

Die Anlage umfasst weiter eine Schleifstation 12 an sich herkömmlicher Bauart. Vororientierte Scheiben 9 können auf eine Saugplatte 13 gelegt werden, welche um eine Vertikalachse drehbar ist, um den Rand der Scheibe 9 mittels einer Schleifscheibe 14 zu schleifen.

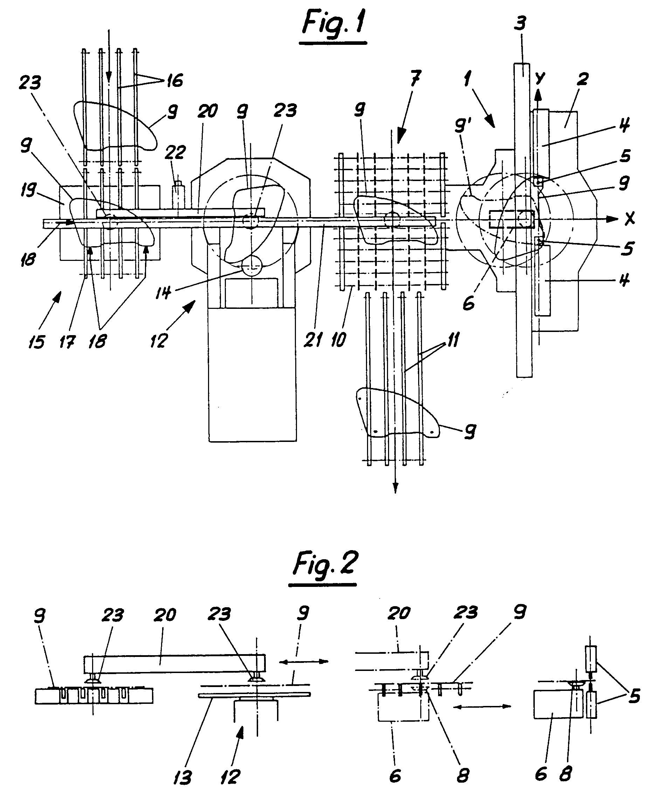

Die Anlage weist ferner eine Positionierungsstation 15 auf. Figur 1 zeigt, dass mittels Förderbändern 16 und Förderbänder 17 Scheiben 9 in die Positionierungsstation gefördert werden können, in welcher durch Pfeile schematisch angedeutete Anschläge 18 einstellbar angeordnet sind. Die Förderbänder 17 sind absenkbar, so dass je eine Scheibe 9 auf den Tisch 19 abgelegt werden kann. Die Tischplatte ist perforiert, und es kann Druckluft zugeführt werden, auf welcher die Scheibe 9 leicht beweglich schwimmt. In einer mittleren Durchbrechung des Tisches 19 befindet sich ein nicht dargestellter, seitlich beweglicher Saugteller, mittels welchem die Scheibe 9 erfasst und gegen die Anschläge 18 verschoben werden kann. Es erfolgt damit eine präzise Vororientierung, die jedoch auch als definitive Orientierung für die ganze Bearbeitung gilt, denn die Scheibe wird nur noch in definierter vororientierter Lage weitergefördert in die Schleifstation und schliesslich in die Bohrstation.

Zu diesem Zwecke ist eine Uebersetzvorrichtung vorhanden. Sie weist einen Schlitten 20 auf, welcher längs einer Führung 21 mittels eines Antriebsmotors 22 verschoben werden kann. Der Schlitten 20 ist mit zwei Saugtellern versehen, welche zum präzisen Erfassen einer Scheibe abgesenkt werden können. Die beiden Saugteller 23 dienen dabei dazu, gleichzeitig je eine orientierte Scheibe 9 aus der Positionierungsstation in die Schleifstation, und eine geschliffene Scheibe aus der Schleifstation in die Uebergabestation 7 überzuführen. In der Uebergabestation wird dann, wie beschrieben, die Scheibe 9 durch den Ueberbringer 6 übernommen und in die Bohrposition gebracht.

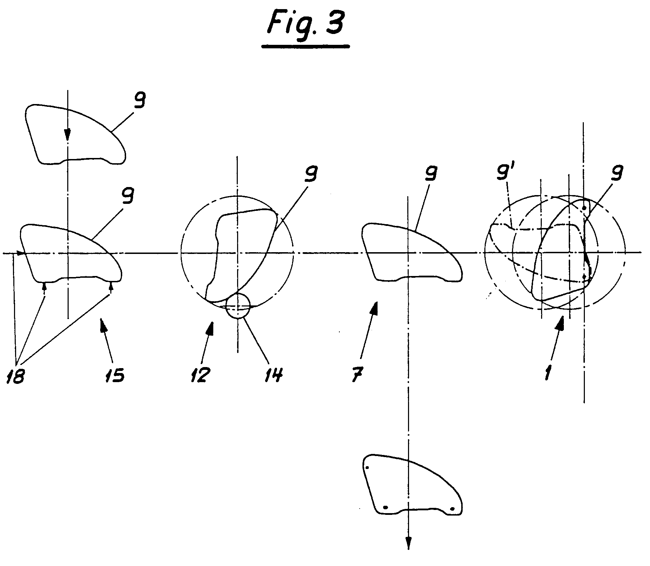

Dieser Ablauf ist in Figur 3 schematisch dargestellt. Eine unbearbeitete ausgeschnittene Scheibe 9 gelangt in die Positionierungsstation und wird dort in den beschriebenen Weise gegen die Anschläge 18 geführt und orientiert. Sie gelangt dann in die Schleifstation 12, wo der Rand geschliffen wird. Dann gelangt die Scheibe 9 in die Uebergabestation 7 und wird dort vom Zubringer 6 erfasst und in die Bohrposition gebracht. In Figur 3 ist angedeutet, dass in einer ersten Position 9 zwei Löcher gebohrt werden, während dann in einer zweiten Position der Scheibe ein weiteres Loch gebohrt wird. Die Scheibe wird dann aus der Schleifposition in die Uebergabestation 7 zurückgebracht, wo sie vom Rollentransport 10 erfasst, auf die Förderbänder 11 übergeben und abtransportiert wird.

Alle Bewegungsabläufe werden nach einem bestimmten Programm zentral gesteuert.

Es sind bestimmte Ausführungsvarianten möglich. So könnte beispielsweise die Schleifstation 12 wegfallen. Ein wesentlicher Vorteil der dargestellten Anlage besteht aber gerade darin, dass die gesamte Fertigbearbeitung einschliesslich Schleifen und Bohren mit einer einmaligen Positionierung der Rohlinge erfolgen kann. Die Anlage könnte andererseits auch ausgebaut bzw. erweitert werden, indem parallel zu der in Figur 1 dargestellten Bearbeitungsstrasse weitere gleiche Bearbeitungsstrassen angefügt werden, wobei dann unbearbeitete Scheiben 9 jeweils mittels der Förderbänder 17 und unwirksamen Anschlägen 18 durch vordere Positionierungsstationen zur nächsten oder übernächsten durchgefördert werden und dort auf dem Tisch 19 der Positionierungsstation abgelegt werden, wo die Platte orientiert und dann weiter bearbeitet werden soll. Desgleichen können die Uebergabestationen 7 sozusagen in Serie geschaltet sein, wobei dann abwechslungsweise schon fertigbearbeitete Scheiben durch Uebergabstationen durchgefördert werden, bis sie auf die Förderbänder 11 gelangen und endgültig abtransportiert werden, oder aber die Scheiben können nach Vorbearbeitung in der Schleifstation in der beschriebenen Weise vom Ueberbringer 6 erfasst und in Bohrposition gebracht werden. Zwischen den dargestellten Rollentransporten 7 der Uebergabestationen können in diesem Falle zusätzliche Förderbänder für fertigbearbeitete Scheiben vorgesehen sein. Auch in diesem Falle werden alle Bewegungsabläufe durch eine zentrale Steuerung koordiniert.

## Patentansprüche

1. Anlage zur Bearbeitung von Glasscheiben, mit mindestens einer Bohrstation mit einem Zubringer, zum Einführen je einer Glasscheibe in Zuführrichtung (x) in die Bohrstation, mit Mitteln zum Ausrichten der Glasscheibe in ihre Bohrposition und mit mindestens einem Bohrkopf, dadurch gekennzeichnet, dass der Zubringer (6, 8) als in Zuführrichtung (X) verschiebbarer Wagen (6) mit einem drehbaren Träger (8) für je eine Glasscheibe (9) ausgebildet ist, dass Mittel (18-23) zum vororientierten Aufbringen von Glasscheiben auf den drehbaren Träger des Wagens vorgesehen sind, und dass eine zentrale Steuerung für alle Bewegungsabläufe vorgesehen ist.

2. Anlage nach Anspruch 1, dadurch gekennzeichnet, dass zwei Bohrköpfe (5) bzw. Bohrer in einer Achse (y) quer zur Zuführrichtung (X) einstellbar sind.

3. Anlage nach Anspruch 1 bis oder 2, gekennzeichnet durch mindestens eine Positionierstation (15), in welcher Glasscheiben (9) vororientiert werden können, und eine Übersetzvorrichtung (20 - 23) zum Überführen vororientierter Platten (9) auf den drehbaren Träger (8) des Zubringer (6).

4. Anlage nach Anspruch 3, dadurch gekennzeichnet, dass die Positionierstation (15) einen beweglichen Träger, z. B. Saugteller aufweist, welcher dem Anlegen einer auf ihn aufgesetzten Glasscheibe (9) gegen Anschläge (18) dient.

5. Anlage nach einem der Anprüche 1 bis 4, gekennzeichnet durch eine Schleifstation (12), wobei vororientierte Glasscheiben (9) der Schleifstation (12) und der Bohrstation (1) ohne Neuorientierung durch die Übersetzvorrichung (20 - 23) und den Zubringer (6) zugeführt werden können.

6. Anlage nach Anspruch 5, gekennzeichnet durch eine gemeinsame Übersetzvorrichtungen (23), z. B. Saugtellern, zum übersetzen von Glasscheiben (9) aus der Positionierstation (15) in die Schleifstation (12) bzw. aus der letzten auf den Zubringer (6).

7. Anlage nach einem der Ansprüche 1 bis 6, gekennzeichnet durch eine Übergabestation (7), in welcher Glasscheiben (9) auf den Zubringer (6) übergesetzt werden können und über welche Glasscheiben (9) quer zur Zuführrichtung transportiert werden können.

8. Anlage nach Anspruch 7, dadurch gekennzeichnet, dass die Übergabestation (7) einen vertikal verstellbaren Transportrost, z. B. einen Rollentransport (10), aufweist.

9. Anlage nach einem der Ansprüche 1 bis 8 dadurch gekennzeichnet, dass nebeneinander mehrere Bohrstationen (1) mit Zubringern (6) angeordnet sind, wobei Transportmittel zum Abtransport fertig bearbeiteter Glasscheiben, z. B. die Übergabestationen (7) nach Anspruch 7, vorgesehen sind.

10. Anlage nach Anspruch 9, dadurch gekennzeichnet, dass der Bohrstation (1) auch mindestens eine Positioniersstation (15) zugeordnet ist, wobei Transportmittel (16, 17) vorhanden sind, welche unbearbeitete Glasscheiben (9) durch mindestens eine Positionierungsstation (15) durchfördern können.

## Claims

1. Installation for the treatment of glass panes, comprising at least one drilling station with a feeding device, for the purpose of introducing a respective glass pane into the drilling station in the feeding direction (x), the installation further comprising means for the alignment of the glass pane in its drilling position, and at least one drilling head, characterised in that the feeding device (6, 8) is in the form of a carriage (6) which is displaceable in the feeding direction (X) and provided with a rotatable support (8) for a respective glass pane (9), in that means (18 - 23) for a pre-positioned placement of glass pane on the rotatable support of the carriage are provided, and in that a central control for the entire sequence of movements is provided.

2. Installation according to claim 2, characterised in that two drilling heads (5) resp. drills are adjustable in an axis (y) which is transversal to the feeding direction (X).

3. Installation according to claim 1 or 2, characterised by at least one positioning station (15) allowing a preliminary positioning of glass panes (9), as well as a translating device (20 - 23) for the transfer of pre-positioned panes (9) to the rotatable support (8) of the feeding device (6).

4. Installation according to claim 3, characterised in that the positioning station (15) comprises a movable support, e.g. a vacuum disk, for the purpose of feeding a glass pane (9) placed thereon towards positioning stops (18).

5. Installation according to one of claims 1 to 4, characterised by a grinding station (12), previously positioned glass panes (9) being fed to the grinding station (12) and to the drilling station (1) by the translating device (20 - 23) and the feeding device (6) without another positioning.

6. Installation according to claim 5, characterised by common translating devices (23), e.g. vacuum disks, for the purpose of transferring glass panes (9) from the positioning station (15) to the grinding station (12) resp. from the latter to the feeding device (6).

7. Installation according to one of claims 1 to 6, characterised by a transfer station (7) allowing the transfer of glass panes (9) to the feeding device (6) and the transport of glass panes (9) transversally to the feeding direction.

8. Installation according to claim 7, characterised in that the transfer station (7) comprises a vertically adjustable transport grid, e.g. a roller transport means (10).

9. Installation according to one of claims 1 to 8, characterised in that a plurality of drilling stations (1) with feeding devices (6) are disposed side by side while transport means for the removal of finished glass panes, e.g. the transfer stations (7) of claim 7, are provided.

10. Installation according to claim 9, characterised in that at least one positioning station (15) is associated to the drilling station (1) while transport means (16, 17) are provided which allow the transfer of unworked glass panes (9) through at least one positioning station (15).

## Revendications

1. Installation pour l'usinage de plaques de verre, comprenant au moins une station de perçage avec un dispositif d'amenée pour l'insertion en direction d'amenée (x) d'une plaque de verre correspondante dans la station de perçage, des moyens permettant l'orientation de la plaque de verre dans sa position de perçage, et au moins une tête de perçage, caractérisée en ce que ledit dispositif d'amenée (6, 8) est réalisé sous forme d'un chariot (6) déplaçable dans la direction d'amenée (X) qui comporte un support rotatif (8) pour une plaque de verre (9) correspondante, que des moyens (18 - 23) sont prévus qui permettent de poser des plaques de verre préalablement orientées sur ledit support rotatif du chariot, et qu'une commande centrale pour tous les mouvements est prévue.

2. Installation selon la revendication 1, caractérisée en ce que deux têtes de perçage (5) resp. perceuses sont déplaçables dans un axe (y) transversal à la direction d'amenée (X).

3. Installation selon la revendication 1 ou 2, caractérisée par au moins une station de positionnement (15) permettant l'orientation préalable des plaques de verre (9), et par un dispositif de déplacement (20 - 23) permettant de transférer les plaques (9) préalablement orientées au support rotatif (8) du dispositif d'amenée (6).

4. Installation selon la revendication 3, caractérisée en ce que ladite station de positionnement (15) comporte un support déplaçable, par exemple un plateau aspirant, qui permet d'avancer contre des butées (18) une plaque de verre (9) posée sur ledit support.

5. Installation selon l'une des revendications 1 à 4, caractérisée par une station de meulage (12), les plaques de verre (9) préalablement orientées pouvant être amenées par le dispositif de déplacement (20 - 23) et le dispositif d'amenée (6) à la station de meulage (12) et à la station de perçage (1) sans autre orientation.

6. Installation selon la revendication 5, caractérisée par des dispositifs de déplacement (23) communs, par exemple des plateaux aspirants, permettant de transférer les plaques de verre (9) de la station de positionnement (15) à la station de meulage (12) resp. de cette dernière au dispositif d'amenée (6).

7. Installation selon l'une des revendications 1 à 6, caractérisée par une station de transfert (7) qui permet de transférer les plaques de verre (9) au dispositif d'amenée et de transporter les plaques de verre (9) en direction transversale à la direction d'amenée.

8. Installation selon la revendication 7, caractérisée en ce que la station de transfert (7) présente une grille de transport verticalement déplaçable, par exemple un transport à rouleaux (10).

9. Installation selon l'une des revendications 1 à 8, caractérisée en ce que plusieurs stations de perçage (1) comportant des dispositifs d'amenée (6) sont disposées l'une à côté de l'autre, des moyens de transport pour l'enlèvement des plaques de verre finies, par exemple les stations de transfert selon la revendication 7, étant prévus.

10. Installation selon la revendication 9, caractérisée en ce qu'au moins une station de positionnement (15) est également associée à la station de perçage (1), des moyens de transport (16, 17) étant prévus qui sont capables de passer des plaques de verre (9) brutes par au moins une station de positionnement (15).
